# EUROPÄISCHE PATENTSCHRIFT

(11) **EP 0 746 428 B1**
(45) Veröffentlichungstag und Bekanntmachung des Hinweises auf die Patenterteilung: **11.02.1998**
(21) Anmeldenummer: 95910418.3
(22) Anmeldetag: 27.02.1995
(51) Int. Cl.: B09C 1/08, C09K 3/32, C02F 1/68, C02F 1/28

(54) **VERFAHREN ZUR ABSORPTION VON ORGANISCHEN UMWELTBELASTENDEN SCHADSTOFFEN**
METHOD OF ABSORBING ORGANIC POLLUTANTS
PROCEDE D'ABSORPTION DE SUBSTANCES POLLUANTES ORGANIQUES

(30) Priorität: 25.02.1994 DE 4406714
(43) Veröffentlichungstag der Anmeldung: 11.12.1996
(73) Patentinhaber: Zinke, Bernhard, 03044 Cottbus (DE)
(72) Erfinder: Zinke, Bernhard, 03044 Cottbus (DE)
(74) Vertreter: Zeitler & Dickel
(86) Internationale Anmeldenummer: DE9500252
(87) Internationale Veröffentlichungsnummer: WO9523041

(56) Entgegenhaltungen:
- EP-A- 0 006 776
- WO-A-88/02739
- WO-A-93/15831
- DD-A- 201 649
- DE-A- 2 339 143
- DE-A- 4 106 052
- GB-A- 2 249 972
- US-A- 4 514 307

## Beschreibung

Die Erfindung betrifft ein Verfahren gemäß dem Oberbgriff des Anspruches 1.

Ein derartiges Verfahren ist Gegenstand der DE A 2 339 143. Hier wird mittels eines Rührprozesses Elektrofilterasche dem Abwasser, welches hydrophobe organische Stoffe, insbesondere Öle und/oder Fette in Form von Emotionen und/oder in grob disperser Form enthält, zugegeben, die das Öl/Fett adsorbiert und anschließend sedimentiert und nach adsorptiver Ölablagerung zu einer stichfesten Masse angesteift. Infolge des Einsatzes nur adsorptiv wirkender Flugaschen ist ein Zwangsrührprozeß (Intensivvermischung) mit Verweilzeit der Flugasche in der Emulsion erforderlich, um die Emulsion zu spalten und vor der Sedimentation das Öl/Fett zu adsorbieren.

Das Dokument WO-A 88/02739 beschreibt ein Verfahren, gemäß welchem die aktive hydratisierende Flugasche mit einem Wasser-Asche-Verhältnis zwischen 0,23 und 0,35 zusätzlich zur Verfestigung/Bindung schadstoffbelasteter Materialien, Böden und Flüssigkeiten verwendet wird, d.h. in die hydraulisch sich verfestigende Aschematrix werden Stoffe hineingepackt und somit in das neu entstehende Gefüge eingebunden. Die Wirkung adsorptiver und insbesondere absorptiver Flugaschereaktionen zur Einbindung und Fixierung von Flüssigschadstoffen und deren Lösungsprodukten wird hierbei nicht ausgenutzt.

Gleiches gilt für das Dokument US-A 4 514 307. Es werden dort lediglich Feststoffe in Partikelform, wie Erdölraffinerieschlamm und ähnliches, mit einer Kalk-Flugasche-Wasser-Mischung zusammengeführt, um hieraus ein Stabilisat zu bilden.

Nach der WO-A 93/15831 wird allgemein Flugasche fester Brennstoffe eingesetzt, um toxische, radioaktive und kontaminierende Substanzen zu fixieren.

Für die Absorption von Schadstoffen ist eine Vielzahl von Technologien und Stoffen bekannt, für deren Anwendung und Herstellung sowie Entsorgung erhebliche Aufwendungen erforderlich sind, ohne daß für jeden Fall eine der Schadstoffbelastung entsprechende umfassende Immobilisierung eintritt.

Dabei werden als Adsorptionsmittel Polymere (z.B. DD 298 132, DE 4 008 693), Bindemittel (z.B. DD 144 274, 201 649, 234 370; DE 4 108 089, 3 825 905, 2 951 776, 2 452 061), kohlenstoffhaltige Stoffe (z.B. DD 223 076, 296 069, 277 595, 205 390; DE 3 818 096, 2 536 807), aufgeschäumte Stoffe (z.B. DE 4 113 125, 4 038 155, 2 738 528; DD 137 256), chemische Mittel (z.B. DE 3 908 746, 3 507 917, 3 423 885, 2 434 632), biologische Stoffe (z.B. DE 4 104 898, 3 818 096, 1 769 461) oder Mikroorganismen (z.B. DE 2 911 016) verwendet. Die schadstoffbelasteten Stoffe werden mit den Technologien Erwärmung (z.B. DD 294 684, 297 575), Subtraktion (z.B. DD 223 076) oder Extraktion (z.B. DE 4 233 584) aufbereitet.

Besondere Probleme stellen jedoch die durch Havarien in Gewässer eingeleiteten Schadstoffe und die durch Lagerung in Deponien oder Altablagerungen eingebrachten Schadstoffe dar. Dabei sind Ablagerungen mit flüssigen und/oder schlammigen Phasen Problemschwerpunkte. Zur Beherrschung letztgenannter Ablagerungen sind zumeist umfangreiche und aufwendige bautechnische Maßnahmen erforderlich, damit die Schadstoffe weder in das Grundwasser noch in das Oberflächenwasser gelangen. Eine Immobilisierung ist für diese Fälle nur mit außerordentlich hohen Aufwendungen durch thermische oder Extraktions-Behandlungen möglich, wobei dann immer noch weitere Aufwendungen für die Entsorgung erforderlich sind. Der Erfindung liegt daher die Aufgabe zugrunde, mit einfachen Mitteln eine Absorption der Schadstoffe und deren Immobilisierung zu erreichen.

Zur lösung des oben beschriebenen Problems wird ein Verfahren entsprechend Anspruch 1 vorgeschlagen.

Wurden die Schadstoffe durch Havarie schwimmend auf dem und/oder schwebend im Wasser eines Gewässers eingebracht, so wird erfindungsgemäß auf die Oberfläche des Gewässers die Flugasche aufgegeben, die Schadstoffe an die Flugasche absorbiert, das Flugasche-Schadstoff-Gemisch im Wasser sedimentiert, als schadstoffimmobilisiertes Gemisch auf dem Grund des Gewässers abgesetzt und verfestigt.

Zur sicheren Abdeckung wird auf die Oberfläche des Schadstoffreservoirs und/oder der Sedimentationsschicht eine mit elastischen Materialien, z.B. Textilschnitzeln, vermischte zementaktivierte Flugasche-Wasser-Suspension sedimentiert, abgesetzt und verfestigt.

In Ausführungsbeispielen wird die Erfindung näher erläutert. Die Zeichnung zeigt in:
- Fig. 1: den technologischen Ablauf der Immobilisierung eines durch Havarie auf Böden ausgebrachten Schadstoff in schematischer Darstellung,
- Fig. 2: den technologischen Ablauf der Immobilisierung eines durch Havarie in ein Gewässer ausgebrachten Schadstoff in Prinzipdarstellung,
- Fig. 3: den technologischen Ablauf der Immobilisierung von durch Lagerung in der Deponie oder Ablagerung eingebrachten Schadstoffen in Prinzipdarstellung.

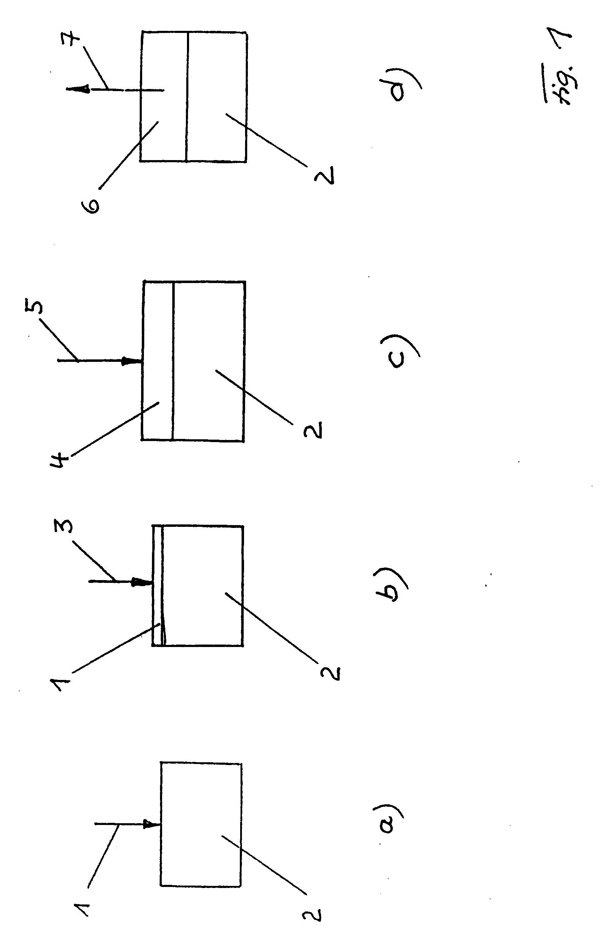

Durch die Havarie gelangt der Schadstoff 1, z.B. Öl, auf die Oberfläche des sandigen Bodens 2 (Fig. 1a). Auf die Oberfläche des auf dem Boden 2 verteilten Schadstoffes 1 wird Flugasche oder mit Zement aktivierte Flugasche 3 großer Oberfläche und Hohlkugelstruktur aufgestreut (Fig. 1b). Vorteilhaft wird Flugasche aus braunkohlenstaubgefeuerten Dampfkesseln verwendet. Die Flugasche 3 adsorbiert den Schadstoff 1 und bildet das Schadstoffaufgesaugte Gemisch 4, in das Wasser 5 eingebracht wird (Fig. 1c). Der Gesamtwasseranteil beträgt dabei 10% der eingebrachten Trockenmasse und aktiviert die Flugasche 3. Das dabei erzeugte Schadstoff-Asche-Wasser-Gemisch 6 wird vor Ort einbaufertig gemischt und aufgenommen oder aufgenommen und am Verwendungsort einbaufertig gemischt (Fig. 1d). Das Schadstoff-Asche-Wasser-Gemisch 6 (Fig. 1d) wird als Dichtstoff 7 für eine Deponie oder einen Verkehrswegeunterbau fugenfrei verarbeitet. Das so immobilisierte Gemisch ist auch ohne weiteres ablagerbar. Nach Aushärtung ist der Schadstoff langfristig und auslaugungsfest immobiiisiert. Diese Technologie ist ebenso für durch eine Havarie ausgetretene Teere, Phenole und andere Schadstoffe geeignet, um diese zu immobilisieren.

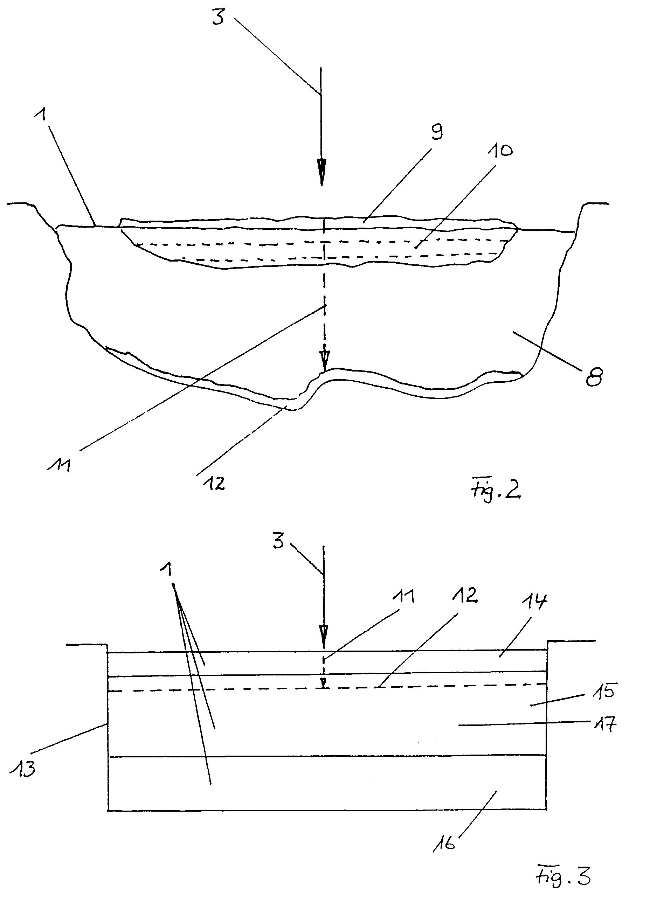

In das Gewässer 8 wird nach einer Havarie der Schadstoff 1 mit dem aufschwimmenden Anteil 9 und dem schwebenden Anteil 10 eingeleitet (Fig. 2). Auf die Oberfläche des Gewässers 8 und im Bereich der Ausbreitung des Schadstoffes 1 wird Flugasche bzw. mit Zement aktivierte Flugasche 3 gleichmäßig aufgegeben.

Die Flugasche 3 bindet durch Sedimentation 11 die auf der Oberfläche schwimmenden Anteile 9 und die im Gewässer 8 schwebenden Anteile 10 und wird mit dem Wasser des Gewässers 8 aktiviert.

Das wasseraktivierte Flugasche-Schadstoff-Gemisch sedimentiert im Gewässer 8 und setzt sich am Boden des Gewässers ab und verfestigt sich als immobilisierte Schicht 12. Diese Schicht 12 ist langfristig stabil und auslaugungsfest.

In der als Schadstoffreservoir 13 angelegten Deponie oder Ablagerung sind Schadstoffe 1 in Form einer flüssigen Phase 14 mit aufschwimmenden sowie schwebenden Schadstoffteilen, in Form einer schlammigen Phase 15 und der Feststoffablagerung 16 eingelagert (Fig. 3).

Auf die Oberfläche der flüssigen Phase 14 wird die Flugasche 3 trocken oder als Asche-Wasser-Suspension aufgegeben.

Die schwimmenden und schwebenden Anteile des Schadstoffes in der flüssigen Phase 14 absorbieren an der Flugasche 3 durch Sedimentation 11. Die schlammigen Anteile des Schadstoffes in der schlammigen Phase 15 absorbieren ebenfalls an der Flugasche 3 durch die Sedimentation, wobei die Schlammschicht 17 verdichtet gebildet wird. Das aktivierte Flugasche-Schadstoff-Gemisch sedimentiert in den Phasen 14, 15 und setzt sich auf der verdichteten Schlammschicht 17 ab und verfestigt sich als immobilisierte Schicht 12. Diese Schicht 12 ist ebenfalls langfristig stabil und auslaugungsfest.

Darüber hinaus wird die Feststoffablagerung 16 und die Schlammschicht 17 abgedeckelt. Die flüssigen und Teile der schlammigen Phasen 14, 15 sind derart gereinigt, daß diese als Wasser abgezogen werden und z.B. als Kreislaufmedium oder über Wasseraufbereitungsanlagen weiter verwendbar sind.

Auf die Schicht 12 sind weitere Schichten absetzbar, indem Flugasche-Wasser-Suspension eingebracht, sedimentiert, abgesetzt und verfestigt wird.

Die Schicht 12 und die weiteren Schichten stellen ebenfalls immobilisierte, stabile und auslaugungsfeste Schichten dar, so daß eine Abdeckelung der Deponie oder Altablagerung durchgeführt wird.

Es ist ebenso möglich, muldenförmige Schadstoffreservoirs, z.B. Teerseen, mit schwimmenden und schwebenden Anteilen abzudecken.

Hier wird trockene Flugasche oder Flugasche-Suspension eingebracht, so daß die Flugasche die schwimmenden und schwebenden Anteile absorbiert und als Asche-Schadstoff-Gemisch sedimentiert.

Dabei werden Dickschlamm-Phasen verdichtet und darauf das Gemisch abgesetzt, verfestigt und als immobilisierte Schicht ausgebildet.

Die so gereinigten flüssigen Phasen sind wiederum absetzbar.

Besondere Vorteile ergeben sich, wenn der zementaktivierten Asche-Wasser-Suspension elastische Materialien, z.B. Textilschnitzel, zugegeben, ebenfalls sedimentiert, abgesetzt und verfestigt werden. Dadurch wird eine elastische Schicht als Abdeckelung geschaffen, die hochbelastbar ist.

Weiterhin ist es möglich, eine Deponie oder Altablagerung mit Feststoffablagerung ebenfalls mit solchen Schichten zu versehen.

Durch die Erfindung werden folgende Vorteile erreicht:
1. Schadstoffbindung und Immobilisierung durch Absorption und Diffundierung der Schadstoffe in die Flugasche bei Vorliegen der Schadstoffe in flüssiger und/oder schlammiger Form.
2. Die gebildeten Schichten stellen Abdecklungen mit Oberflächen-, Versiegelungs- und Geruchsschutz-Funktion dar.
3. Die gebildeten Schichten sind hoch belastbar, auslaugungsfest und stabil.
4. Die angewendete Technologie ist einfach und kostengünstig zu realisieren.
5. Die Flugaschen sind jederzeit und preiswert verfügbar. Sie bedürfen keiner weiteren Aufbereitung, sondern werden im Anfallzustand verwendet. Gegebenenfalls ist lediglich eine Zementaktivierung durchzuführen.
6. Altlastenprobleme sind sicher, ökonomisch und ökologisch lösbar.
7. Die bisherigen hohen Aufwendungen für Herstellung sowie Anwendung von Absorbenzien und Entsorgung der Schadstoffe entfällt weitgehend.

## Patentansprüche

1. Verfahren zur Absorption von organischen umweltbelastenden Schadstoffen, wie Öl, Teer und/oder Phenole schwimmend und/oder schwebend in einem Gewässer oder einer als Schadstoffreservoir angelegten Deponie mit flüssigen und/oder schlammigen Phasen und/oder Feststoffablagerungen, wobei Flugasche mit dem Schadstoff in Kontakt gebracht wird, **gekennzeichnet dadurch,** daß auf die Oberfläche des Gewässers die Flugasche und/oder mit Zement aktivierte Flugasche großer Oberfläche und Hohlkugelstruktur, insbesondere Flugaschen aus braunkohlenstaubgefeuerten Dampfkesseln aufgegeben, die Schadstoffe an die Flugasche absorbiert, das Flugasche-Schadstoff-Gemisch im Wasser sedimentiert, als schadstoffimmobilisiertes Gemisch auf dem Grund des Gewässers abgesetzt und verfestigt wird.

2. Verfahren nach Anspruch 1, dadurch gekennzeichnet, daß die flüssige Phase durch die Sedimentation gereinigt und abgezogen wird oder schadstofffrei verdunstet.

3. Verfahren nach einem der Ansprüche 1 oder 2, dadurch gekennzeichnet, daß auf die Oberfläche der gereinigten flüssigen Phase Flugasche aufgebracht, die dadurch erzeugte Suspension sedimentiert, auf den Phasen schadstofffrei abgesetzt und verfestigt wird.

4. Verfahren nach einem der vorangehenden Ansprüche, dadurch gekennzeichnet, daß auf die Oberfläche der Sedimentationsschicht eine Flugasche-Wasser-Suspension durch Sedimentation abgesetzt und verfestigt wird.

5. Verfahren nach einem der vorangehenden Ansprüche, dadurch gekennzeichnet, daß auf die Oberfläche der Sedimentationsschicht eine mit elastischen Materialien, z.B. Textilschnitzel vermischte und mit Zement aktivierte Flugasche-Wasser-Suspension durch Sedimentation abgesetzt sowie verfestigt wird.

## Claims

1. Process for the absorption of organic, environment-harming pollutants, such as oil, tar and/or phenols, floating and/or suspended in a body of water or dump designed as a pollutant reservoir with liquid and/or sludge phases and/or deposits of solids, wherein flue ash is brought into contact with the pollutant,
**characterised in that**
the flue ash and/or cement-activated flue ash of large surface and hollow spherical structure, in particular flue ashes from powdered lignite-fired boilers, is fed onto the surface of the body of water, the pollutants are absorbed into the flue ash, and the flue ash/pollutant mixture is settled out in the water, deposited on the bottom of the body of water as a pollutant-immobilised mixture and solidified.

2. Process according to claim 1, characterised in that the liquid phase is cleaned by the sedimentation and drawn off or evaporated in a pollutant-free manner.

3. Process according to one of claims 1 or 2, characterised in that flue ash is applied to the surface of the cleaned liquid phase and the suspension thereby produced is settled out, deposited on the phases in a pollutant-free manner and solidified.

4. Process according to one of the preceding claims, characterised in that a flue ash/water suspension is deposited by sedimentation on the surface of the sedimentation layer and solidified.

5. Process according to one of the preceding claims, characterised in that a flue ash/water suspension mixed with elastic materials, for example textile clippings, and activated with cement is deposited by sedimentation on the surface of the sedimentation layer and also solidified.

## Revendications

1. Procédé d'absorption de substances organiques polluantes, telles que de l'huile, du goudron et/ou des phénols qui flottent et/ou sont en suspension dans de l'eau, ou d'une décharge formée à titre de réservoir de substances nocives avec des phases liquide et/ou boueuse et/ou des dépôts de substances solides, dans lequel on amène des cendres volantes en contact avec les substances nocives, caractérisé par le fait que l'on dépose sur la surface de l'eau les cendres volantes et/ou des cendres volantes activées au ciment présentant une grande surface et une structure sphérique creuse, en particulier des cendres volantes provenant de chaudières à vapeur fonctionnant à la poussière de lignite, en ce que l'on absorbe les produits nocifs sur des cendres volantes, en ce que l'on fait sédimenter le mélange de cendres volantes et de produits nocifs dans l'eau, qu'on le fait déposer au fond de l'eau sous forme d'un mélange immobilisé vis-à-vis des produits nocifs, et qu'on le solidifie.

2. Procédé selon la revendication 1, caractérisé en ce que la phase liquide est purifiée par la sédimentation et en ce qu'elle est extraite, ou qu'on la vaporise sans produits nocifs.

3. Procédé selon l'une ou l'autre des revendications 1 et 2, caractérisé en ce que l'on dépose des cendres volantes sur la surface de la phase liquide purifiée, en ce que l'on fait sédimenter la suspension ainsi produite, qu'on la fait déposer en phases et solidifier sans produits nocifs.

4. Procédé selon l'une des revendications précédentes, caractérisé en ce que l'on dépose par sédimentation sur la surface de la couche de sédimentation une suspension de cendres volantes et d'eau, et qu'on la fait solidifier.

5. Procédé selon l'une des revendications précédentes, caractérisé en ce que sur la surface de la couche de sédimentation, on dépose par sédimentation une suspension de cendres volantes et d'eau, activées avec des ciments et mélangées avec des matériaux élastiques, par exemple des morceaux de textile, et qu'on la fait solidifier.
